# EUROPEAN PATENT APPLICATION

(11) **EP 0 781 062 A2**
(43) Date of publication of application: **25.06.1997**
(21) Application number: 96308080.9
(22) Date of filing: 07.11.1996
(51) Int. Cl.: H04Q 7/22, H04Q 7/32, H04B 7/26

(54) **Radiotelephone system**

(30) Priority: 21.12.1995 US 567675
(71) Applicant: NOKIA MOBILE PHONES LTD., 24101 Salo (FI)
(72) Inventor: Hagqvist, Jari, Euless, Texas 76039 (US); McAteer, Joseph E., Westford, Massachusetts 01886 (US)
(74) Representative: Slingsby, Philip Roy

(57) **Abstract**

Disclosed is a method for operating a radiotelephone system, and a radiotelephone system that operates in accordance with the method. The method includes the steps of: (a) detecting a reception of a start of a DTMF signal from a Public Switched Telephone Network; (b) constructing a first message for indicating a PSTN telephone keypad key that corresponds to the detected start of the DTMF signal; (c) transmitting the first message over a radio channel; (d) receiving the first message from the radio channel with a radiotelephone; and (e) responsive to the received first message, generating a corresponding DTMF audio tone within the radiotelephone. The method further includes the steps of: (f) detecting a reception of a termination of the DTMF signal from the Public Switched Telephone Network; (g) constructing a second message for indicating the PSTN telephone keypad key that corresponds to the detected termination of the DTMF signal; (h) transmitting the second message over the radio channel; (i) receiving the second message from the radio channel with the radiotelephone; and (j) responsive to the received second message, terminating the generation of the corresponding DTMF audio tone within the radiotelephone.

## Description

This invention relates generally to radiotelephone systems and methods and, in particular, to radiotelephone systems that employ dual tone multifrequency (DTMF) signalling.

Digital cellular/mobile radio systems may include circuitry for transmitting DTMF tones through a signalling channel in the uplink direction from a mobile phone to the telephone network. This approach is used because the signalling channel is better error protected than the normal speech channel. Also, a speech coder/decoder (codec) in the speech channel is optimized for passing speech, and not necessarily DTMF tones. When using uplink DTMF signalling the phone detects keypresses and generates the necessary signalling messages for the uplink transmission.

By example, the GSM Specification 04.08, version 4.5.0, June 1993 describes an uplink (mobile phone to network) DTMF capability in section 5.3.3 (DTMF protocol control procedure, pgs. 114-116), section 7.3.5 (DTMF protocol control, pg. 151), section 9.3.24 (Start DTMF message, pg. 287), section 9.3.25 (Start DTMF Acknowledge message, pg. 288), and in section 9.3.26 (Start DTMF reject message, pg. 289).

However, for the downlink direction (i.e., network to mobile phone) there is no DTMF signalling capability provided. The lack of downlink DTMF capability is related to the fact that (a) there traditionally has not existed a need for downlink DTMF tone transmission; and (b) because there is no implicit direct key press indication from the conventional Public Switched Telephone Network (PSTN) phone to the cellular/mobile phone network (e.g., the PSTN connection could be an analog connection).

As telephone systems, and more particularly cellular and radiotelephone communication systems, evolve, a need has been recognized to provide reliable DTMF transmission in the downlink direction. For example, one goal in a proposed Personal Communication System (PCS) is to replace PSTN phones with phones based on radio access (cellular mobile phones). In this case it would be desirable to enable subscribers to use their existing accessories and applications, such as answering machines and facsimile devices, without having to replace them with new devices. Many of these conventional accessories include a DTMF tone detector that provides a capability to control the accessory from a remote location over a PSTN connection. By example, a user is able to call his answering machine from a remote location and, by pressing certain keys on the telephone, to command his answering machine to play back recorded messages, record a new greeting message, etc. This functionality relies on an ability to transmit DTMF tones to the answering machine. However, and as was described above, if the answering machine is coupled to, by example, a cellular telephone network instead of the PSTN, then this capability to transmit DTMF tones to the answering machine is not available, or would not be reliable because of distortion introduced in the speech codec or because of channel errors on the speech channel. As such, the functionality of the answering machine is impaired.

According to a first aspect of the invention there is provided a radiotelephone system, comprising: an interface that is bidirectionally coupled to a network and that is also bidirectionally coupled to a cellular telephone network, said interface comprising means for detecting a reception of a start of a DTMF signal from the network; means for constructing a first message for indicating a network telephone keypad key that corresponds to the detected start of the DTMF signal; and means for transmitting the first message over a radio channel of the cellular telephone network; and a radiotelephone comprising a receiver for receiving the first message from the radio channel, the radiotelephone further comprising means, responsive to the received first message, for generating a corresponding DTMF audio tone.

According to a second aspect of the invention there is provided a radiotelephone, comprising: a receiver for receiving information, including messages, from a radio channel; and means, responsive to a first message to start a generation of a DTMF tone signal that corresponds to a specified one of a plurality of telephone keypad keys, for generating a corresponding DTMF audio tone.

According to a third aspect of the invention there is provided a method for operating a radiotelephone system, comprising the steps of: detecting a reception of a start of a DTMF signal from a Public Switched Telephone Network; constructing a first message for indicating a PSTN telephone keypad key that corresponds to the detected start of the DTMF signal; transmitting the first message over a radio channel; receiving the first message from the radio channel with a radiotelephone; responsive to the received first message, generating a corresponding DTMF audio tone with the radiotelephone; detecting a reception of a termination of the DTMF signal from the Public Switched Telephone Network; constructing a second message for indicating the PSTN telephone keypad key that corresponds to the detected termination of the DTMF signal; transmitting the second message over the radio channel; receiving the second message from the radio channel with the radiotelephone; and responsive to the received second message, terminating the generation of the corresponding DTMF audio tone with the radiotelephone.

According to a fourth aspect of the invention there is provided a method for operating a radiotelephone system, comprising the steps of: generating a DTMF tone signal with a first radiotelephone; transmitting the DTMF tone signal to a cellular network as a first DTMF signalling message; extracting the DTMF tone signal from the first DTMF signalling message at the cellular network; transmitting the DTMF tone signal from the cellular network to a second radiotelephone as a second DTMF signalling message; extracting the DTMF tone signal from the second DTMF signalling message at the second radiotelephone; and responsive to the extracted DTMF tone signal, generating a corresponding DTMF audio tone with the second radiotelephone.

A method in accordance with the invention may include the steps of: (a) detecting a reception of a start of a DTMF signal from a Public Switched Telephone Network; (b) constructing a first message for indicating a PSTN telephone keypad key that corresponds to the detected start of the DTMF signal; (c) transmitting the first message over a radio channel; (d) receiving the first message from the radio channel with a radiotelephone; and (e) responsive to the received first message, generating a corresponding DTMF audio tone within the radiotelephone.

The method may further include the steps of: (f) detecting a reception of a termination of the DTMF signal from the Public Switched Telephone Network; (g) constructing a second message for indicating the PSTN telephone keypad key that corresponds to the detected termination of the DTMF signal; (h) transmitting the second message over the radio channel; (i) receiving the second message from the radio channel with the radiotelephone; and (j) responsive to the received second message, terminating the generation of the corresponding DTMF audio tone within the radiotelephone.

The steps of generating and terminating may each include the optional steps of generating an acknowledgment message for acknowledging receipt of the message from the radio channel; and transmitting the acknowledgment message over a radio channel from the radiotelephone.

In one embodiment in accordance with the invention the first and second messages are received over a radio channel used for conveying signalling information to the radiotelephone, and the optional acknowledgment message is transmitted over a radio channel used for conveying signalling information from the radiotelephone. In this embodiment the steps of detecting and constructing are accomplished by a Mobile Switching Center that is connected to the Public Switched Telephone Network, and the steps of transmitting are accomplished by a basestation subsystem that is coupled between the Mobile Switching Center and the radio channel. Alternatively, the steps of detecting, constructing and transmitting may be accomplished by the basestation subsystem, and the step of constructing may include a step of routing the constructed first and second messages through the Mobile Switching Center and from the Mobile Switching Center to the basestation subsystem.

In a second embodiment in accordance with the invention the first and second messages are received over a radio channel used for conveying encoded speech information to the radiotelephone, and the acknowledgment message is transmitted over a radio channel used for conveying encoded speech information from the radiotelephone. The steps of detecting, constructing and transmitting may be accomplished by a speech transcoder portion of a basestation subsystem that is coupled to the Public Switched Telephone Network through a Mobile Switching Center.

Embodiments of the invention will now be described, by way of example, with reference to the accompanying drawings, in which:
Figure 1 is a block diagram of a first embodiment of this invention, wherein a DTMF detector and a DTMF signalling generator are located within a mobile switching center;
Figure 2 is a block diagram of a second embodiment of this invention, wherein the DTMF detector and the DTMF signalling generator are located within a basestation subsystem;
Figure 3 is block diagram that shows in more detail the mobile switching center of the embodiment of Figure 1;
Figure 4 is block diagram that shows in more detail a portion of the basestation subsystem of the embodiment of Figure 2;
Figure 5 is a block diagram of a conventional GSM cellular radiotelephone system; and
Figure 6 is a block diagram of a portion of a mobile phone that is constructed in accordance with this invention.

The following abbreviations are employed herein.
- PSTN -: Public Switched Telephone Network
- DTMF -: Dual Tone Multifrequency
- MSC -: Mobile Switching Center
- TRC -: Speech Transcoder
- BSS -: Basestation Subsystem
- BSC -: Base Station Controller
- BTS -: Base (Transceiver) Station
- MS -: Mobile Station or Phone (in general, a radiotelephone)
- GSM -: Groupe Speciale Mobile (the European digital cellular telephone standard)
- PCM -: Pulse Code Modulation
- PCS -: Personal Communication System

Embodiments in accordance with the invention may provide a DTMF signalling system for downlink DTMF transmission over a radio interface in a cellular/mobile radiotelephone system. In this description a PSTN to radiotelephone connection is assumed, although embodiments of the invention are not limited for use only with a PSTN. That is, the invention may be embodied in any interface in which DTMF information is known through some signalling either from internal sources, as in the case of a mobile station to mobile station call case, or is known from some external system/network that provides a means for signalling the DTMF directly.

A radiotelephone suitable for connection to at least one radio channel for receiving speech and signalling information is also assumed herein. Although referred to herein as a "mobile phone" or a "mobile station", as in a conventional cellular radiotelephone, it should be realized that the radiotelephone may be physically positioned at a fixed location. By example, the radiotelephone may be located within a home or an office, and need not be carried within a vehicle or by a user. The radiotelephone may also be integrated within another device, such as a facsimile or an answering machine.

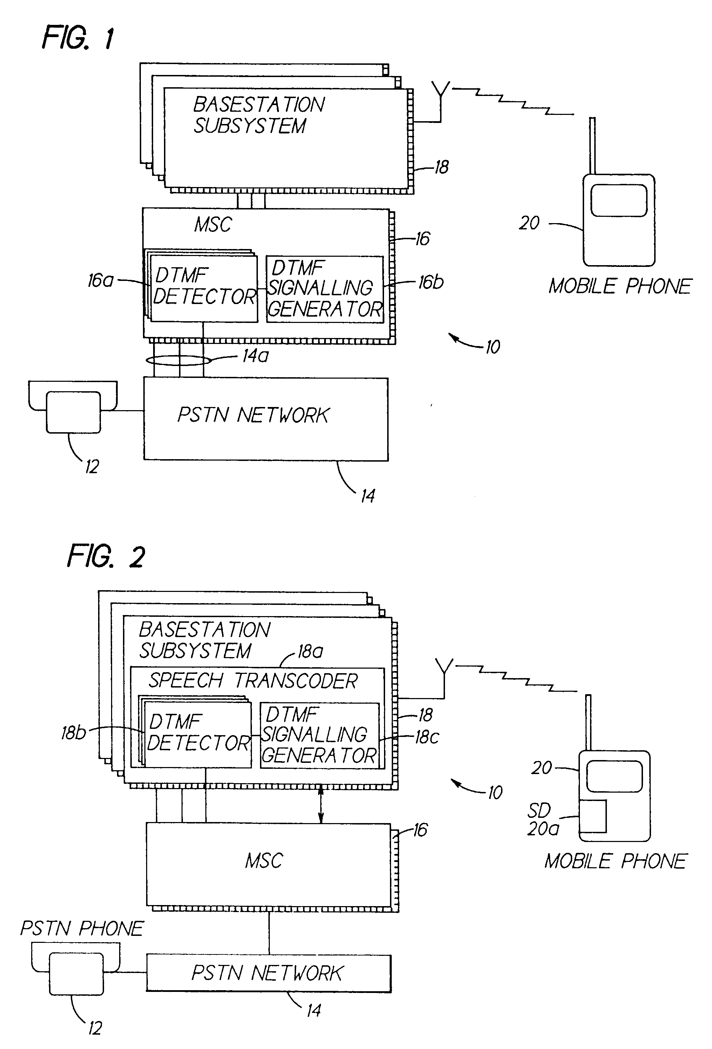

Reference is now made to Figure 1 for illustrating a first embodiment in accordance with the invention. In a communications system 10, when a PSTN user presses a key on a conventional PSTN telephone 12 a DTMF tone is generated in the PSTN telephone and it is transmitted through the PSTN network 14 to the MSC 16 of the cellular/mobile phone system. The MSC 16 routes the call to at least one of a plurality of basestation subsystems 18 to which a cellular/mobile radiotelephone (MS) 20 is connected through the air (radio) interface.

The MSC 16 includes a plurality of DTMF detectors 16a which detect DTMF signals on the incoming trunk lines 14a from the PSTN network 14. The DTMF detectors 16a may be of conventional construction and are not described in detail. Outputs of the DTMF detectors 16a are connected to a DTMF signalling generator 16b which generates DTMF on/off messages for the corresponding mobile phone 20. The DTMF messages are subsequently transmitted through the basestation subsystem 18 to the mobile phone 20, where the messages are interpreted and acted upon.

In greater detail, when a DTMF tone signal is detected in an incoming call in the MSC 16 the DTMF detector 16a indicates to the DTMF signalling generator 16b which DTMF tone signal is being received (i.e., to which corresponding key of the telephone keypad the DTMF tone signal corresponds). In response the DTMF signalling generator 16b constructs one or more signalling messages which are then signalled to the mobile phone 20 via the cellular/mobile phone network. The mobile phone 20 receives the signalling messages and locally generates the indicated DTMF tone and outputs the generated tone through its speaker and/or to some device connected to the mobile phone's audio output.

Having generated the indicated tone within the mobile phone 20, it can be appreciated that another device, such as a facsimile machine or an answering machine, can respond to the tone in a conventional manner. This enables a variety of existing DTMF-dependent devices and applications to be accessed through the cellular network.

As will be described below, embodiments in accordance with the invention may generate and transmit acknowledgment messages from the MS 20 to the DTMF signalling generator 16b when initiating and/or terminating DTMF tone generation within the MS 20.

When the DTMF tone signal terminates at the input to the MSC 16 the DTMF detector 16a indicates this condition to the DTMF signalling generator 16b. The DTMF signalling generator 16b then constructs one or more corresponding signalling messages which are subsequently signalled to the mobile phone 20 via the cellular/mobile phone network. Receipt of this message by the mobile phone 20 causes the mobile phone to terminate the local DTMF tone generation. A corresponding DTMF termination acknowledgment message may be sent from the mobile phone 20 to the DTMF signalling generator 16b.

Figure 2 illustrates a second embodiment in accordance with the invention wherein the DTMF detection and signalling functions are located instead within a speech transcoder 18a of the basestation subsystem 18. In this case each speech transcoder 18a includes a DTMF detector 18b and a DTMF signalling generator 18c.

For this embodiment there are at least two techniques to signal the start and end of a DTMF tone. The first technique performs in-band signalling in which the speech transcoder 18a in the basestation subsystem 18 of the mobile network generates one or more predetermined codes that are assigned for this function to directly signal to a speech decoder portion of a speech transcoder (ST) 20a in the mobile phone 20. The speech transcoder 20a detects the predetermined coded frames within the input stream of encoded speech and, in response, starts or stops the local DTMF generation. An advantage of this technique is that the DTMF signalling occurs independently of any other (normal) signalling in the cellular/mobile network.

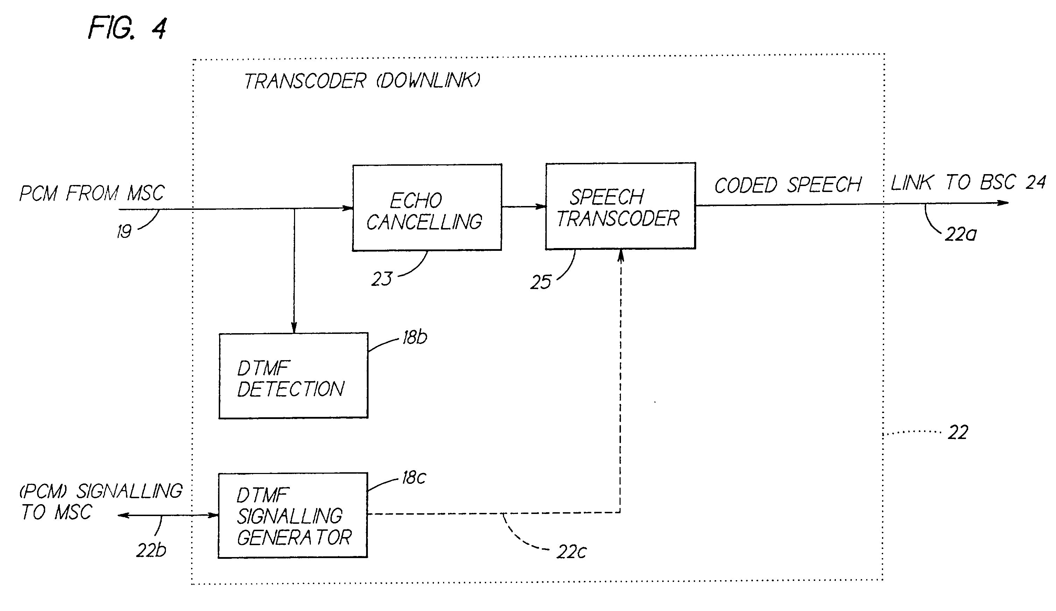

A second technique uses the DTMF signalling generator 18c to indicate the DTMF signalling back to the MSC 16 which then relays the signals to the mobile phone 20. This second technique is described in greater detail below with respect to Figure 4.

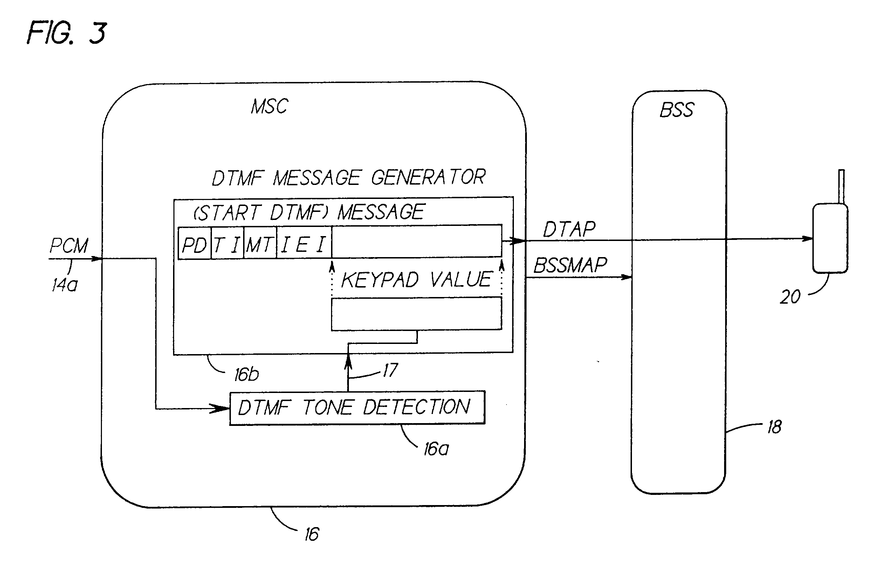

Reference is now made to Figure 3 which illustrates in greater detail the embodiment of Figure 1. This description is made in the context of the GSM cellular network, however, the invention may be applicable to a number of different types of other cellular communication networks.

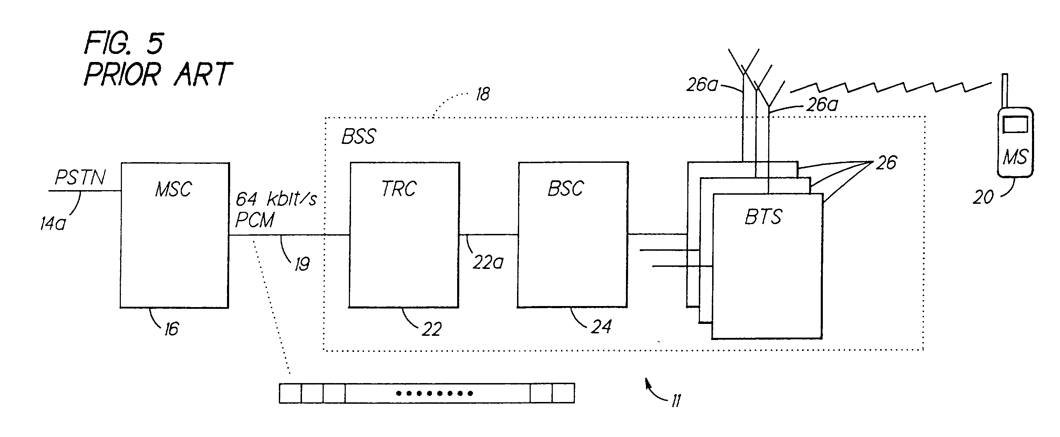

Reference is first made to Figure 5 for showing an exemplary GSM cellular system 11. The PSTN trunk 14a is connected to the MSC 16 which bidirectionally communicates with the basestation subsystem (BSS) 18 via a 2 MB link 19 comprised of 32 channels each of 64 kbits/sec. Some of the 32 channels are reserved for signalling purposes. The BSS 18 includes a speech transcoder (TRC) 22, a base station controller (BSC) 24, and a plurality of base transceiver stations (BTS) 26. Each BTS 26 serves a cell of the cellular radio network via an antenna 26a.

Referring again to Figure 3 the DTMF tones are detected by the DTMF detector 16a of the MSC 16, which is connected to the incoming PCM PSTN lines 14a. The DTMF tone detection can be performed by hardware, such as a bank of filters, or by software. In response to detecting an initiation or a termination of a DTMF tone the DTMF detector 16a provides an output signal on bus 17 to the DTMF message generator 16b. In response to receiving the signal from the DTMF detector 16a a message (Start/Stop DTMF) is generated by the DTMF message generator 16b. The message (assuming the GSM protocol) has the following format:
- PD: Protocol Discriminator
- TI: Transaction Identifier
- MT: Message Type
- IEI: Information Element Identifier

The remainder of the message includes the keypad value (0-9, #, *) as determined from the DTMF signal that is detected by the DTMF detector 16a. This message is then forwarded through the cellular network to the mobile phone 20.

In accordance with an aspect of this invention an optional DTMF acknowledge message may be sent from the mobile phone 20 to the DTMF signal generator 16b. If no acknowledge message is received within a predetermined period of time after having sent a Start/Stop DTMF message, the DTMF message is re-sent by the DTMF message generator 16b.

Reference is now made to Figure 4 which illustrates in greater detail the embodiment of Figure 2. This description is also made in the context of the GSM cellular system 11 of Figure 5, but is applicable to a large number of digital cellular systems (i.e., systems that include a speech transcoder).

Between the MSC 16 and the BSS 18 there is available a 64 kbit/s PCM data and signalling connection 19 with, e.g., 32 PCM slots per 2 MB line. Typically one or more of the 32 slots are reserved for signalling in both directions, with the remaining slots carrying conventional PCM audio (e.g., speech) information. The TRC 22 can include an echo cancellation function 23 and a suitable speech transcoder (coder/decoder) 25 that functions to compress the speech (on the downlink) and form the compressed speech into frames or packets. The MS 20 includes a corresponding transcoder for decompressing the compressed speech and for converting same into an analog speech signal for driving the speaker of the MS 20.

In accordance with this embodiment of the invention the DTMF detector 18b is located in the TRC 22 for detecting DTMF signals from the PCM input 19. As before, the DTMF detector 18b may be implemented using conventional software or hardware techniques. If signalling through the MSC 16 is used (the second technique referred to above) the DTMF signalling generator 18c generates the Start/Stop DTMF messages which are output on bus 22b to the MSC 16. The MSC 16 then routes the Start/Stop DTMF messages over a signalling (as opposed to a speech) channel, as in the first embodiment, to the MS 20. This occurs as described previously with respect to Figures 1 and 3. Optional acknowledgment messages from the MS 20 arrive through an uplink signalling channel, are detected in the MSC 16, and are then provided over bus 22b to the DTMF signalling generator 18c.

For the case of in-band signalling between the speech transcoder 25 of the TRC 22 and the corresponding speech transcoder of the MS 20 (the first technique referred to above), the DTMF signalling generator 18c generates a predetermined coded speech frame (codeword) that is reserved for in-band signalling between the speech transcoders. This codeword contains the DTMF keypad value and is conveyed over the path 22c (shown dashed) between the DTMF signalling generator 18c and the speech transcoder 25. The codeword frame is subsequently transmitted over a downlink speech radio channel and is detected by the speech decoder 20a in the MS 20. In response, the MS 20 initiates or terminates the local generation of the indicated DTMF tone. Optional DTMF acknowledgment messages from the MS 20 are generated in-band and are transmitted on the uplink speech channel using another predetermined codeword. The uplink in-band acknowledgment messages are detected within the speech transcoder 25, and are signaled to the DTMF signalling generator 18c over the bus 22c.

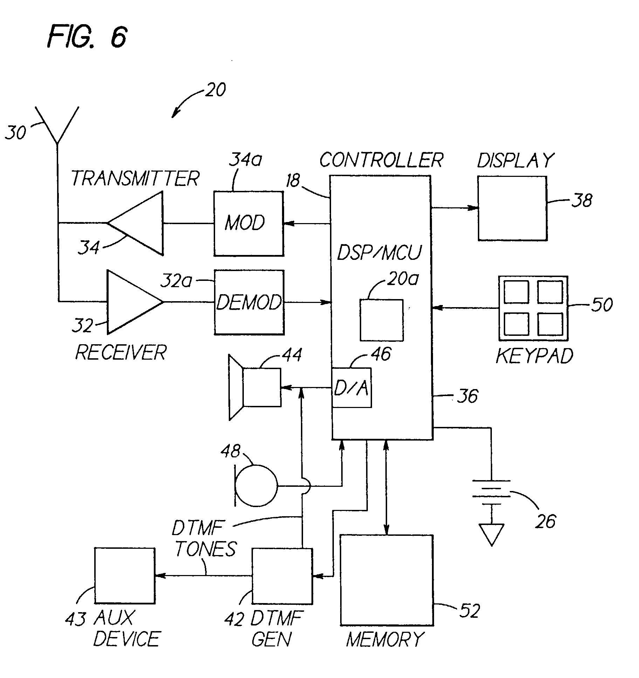

Figure 6 illustrates the MS 20 in a simplified block diagram form. The MS 20 includes an antenna 30 that is coupled to a receiver 32/demodulator 32a and to a transmitter 34/modulator 34a. The output of the demodulator 34a is input to a controller 36 which may be implemented as a digital signal processor (DSP) and a microcontroller unit (MCU). The demodulator 34a may be incorporated into the DSP. When operating in accordance with the first technique that was described above (i.e., out-of-band signalling) the controller 36 identifies the Start/Stop DTMF messages that are received over a downlink signalling radio channel. In response to the receipt of a DTMF-related message, the controller 36 controls a DTMF tone generator 42 to initiate and terminate the generation of a DTMF tone that correspond to the keypad information that forms a part of the downlink DTMF message. In the illustrated embodiment the DTMF generator 42 provides a DTMF tone to the input of a speaker 44 via a digital to analog (D/A) converter 46. Any auxiliary devices 43, such as a facsimile machine or an answering machine, that may be connected at this point are thus able to receive DTMF tones. Alternatively, the DTMF tone generator 42 may be incorporated within the controller 36, which may then output the DTMF tone signal in digital form to the D/A converter 46. Optionally, the controller 36 generates a DTMF acknowledge (ACK) message which is input to the transmitter 34. A keypad 50 is coupled to the controller 36 and enables uplink DTMF transmissions in a conventional fashion. In this regard, reference can be had to those portions of the GSM specification that were referred to previously. The MS 20 can also include a suitable display 38, microphone 48, and a memory 52 that stores the phone's operating program, NAM, and whatever other data is required to operate the MS 20. The memory 52 is preferably comprised of a number of memories, such as ROM, RAM, and non-volatile memory.

In accordance with the second technique described above (i.e., in-band signalling), and assuming that the speech transcoder 20a is also implemented by the DSP portion of the controller 36, the input DTMF messages are detected as predetermined code words that are inserted into the encoded speech frames on the downlink speech channel. Having detected a DTMF message, the DTMF tone generator 42 is activated or deactivated accordingly.

The invention may apply to a wide variety of cellular radio transmission protocols, modulation schemes, and access techniques. For example, the invention may apply equally to Time Division Multiple Access (TDMA) systems and to Spread Spectrum (SS) systems, including Code Division Multiple Access (CDMA) SS systems.

A number of variations of the above described embodiments can be practiced. For example, in a mobile station to mobile station call case, a first mobile station (mobile 1) sends DTMF tones to a second mobile station (mobile 2). In this example, the DTMF tones from mobile 1 to the cellular network (basestation and switch) are referred to as DTMF1, while DTMF tones from the network to mobile 2 are referred to as DTMF2. In this case, the DTMF1 is typically sent with signalling messages such as, by example, in GSM. The network recognizes the signalling messages and extracts the DTMF digits sent in the signal. The network (i.e. the basestation or switch) then generates the necessary DTMF2 signalling in its signalling generator (16b in Figure 1 or 18c in Figure 2) for transmission to mobile 2. This mode of operation applies to both of the above described embodiments.

Thus, while the invention has been particularly shown and described with respect to presently preferred embodiments thereof, it will be understood by those skilled in the art that changes in form and details may be made therein without departing from the claimed invention.

## Claims

1. A radiotelephone system, comprising:
an interface that is bidirectionally coupled to a network and that is also bidirectionally coupled to a cellular telephone network, said interface comprising means for detecting a reception of a start of a DTMF signal from the network; means for constructing a first message for indicating a network telephone keypad key that corresponds to the detected start of the DTMF signal; and means for transmitting the first message over a radio channel of the cellular telephone network; and
a radiotelephone comprising a receiver for receiving the first message from the radio channel, the radiotelephone further comprising means, responsive to the received first message, for generating a corresponding DTMF audio tone.

2. A radiotelephone system as set forth in claim 1 wherein said interface further comprises means for detecting a reception of a termination of the DTMF signal from the network; wherein said message constructing means constructs in response a second message for indicating the network telephone keypad key that corresponds to the detected termination of the DTMF signal; and wherein said transmitting means transmits the second message over the radio channel; and wherein said generating means is responsive to the received second message for terminating the generation of the corresponding DTMF audio tone.

3. A radiotelephone system as set forth in claim 2 wherein said radiotelephone further comprises:
means for generating a first acknowledgment message for acknowledging receipt of the first message and for generating a second acknowledgment message for acknowledging receipt of the second message; and
means for transmitting the first and second acknowledgment messages over a radio channel to said interface means.

4. A radiotelephone system as set forth in claim 1 wherein said interface means is comprised of:
a mobile switching center that is bidirectionally coupled to the network; and
a basestation subsystem that is bidirectionally coupled to said mobile switching center and to said cellular telephone network;
wherein said detecting means and said message construction means are located within said mobile switching center, and wherein said first message is transmitted over a radio signalling channel.

5. A radiotelephone system as set forth in claim 1 wherein said interface means is comprised of:
a mobile switching center that is bidirectionally coupled to the network; and
a basestation subsystem that is bidirectionally coupled to said mobile switching center and to said cellular telephone network;
wherein said detecting means and said message construction means are located within said basestation subsystem, and wherein said first message is transmitted over a radio speech channel.

6. A radiotelephone system as set forth in claim 5 wherein said detecting means and said message construction means are located within a speech transcoder of said basestation subsystem, and wherein said first message is transmitted within a speech data frame.

7. A radiotelephone system as set forth in claim 1 wherein said interface means is comprised of:
a mobile switching center that is bidirectionally coupled to the network; and
a basestation subsystem that is bidirectionally coupled to said mobile switching center and to said cellular telephone network;
wherein at least said message construction means is located within said basestation subsystem, wherein said first message is output from said message construction means to said mobile switching center, and wherein said first message is output from said mobile switching center, through said basestation subsystem, and is transmitted over a radio signalling channel.

8. A radiotelephone, comprising:
a receiver for receiving information, including messages, from a radio channel; and
means, responsive to a first message to start a generation of a DTMF tone signal that corresponds to a specified one of a plurality of telephone keypad keys, for generating a corresponding DTMF audio tone.

9. A radiotelephone as set forth in claim 8 wherein said generating means is further responsive to a second message to terminate the generation of a DTMF tone signal that corresponds to a specified one of a plurality of telephone keypad keys, for terminating the generation of the corresponding DTMF audio tone.

10. A radiotelephone as set forth in claim 9 wherein said radiotelephone further comprises:
means for generating a first acknowledgment message for acknowledging receipt of the first message and for generating a second acknowledgment message for acknowledging receipt of the second message; and
means for transmitting the first and second acknowledgment messages over a radio channel.

11. A radiotelephone as set forth in claim 9 wherein said first and second messages are received over a radio channel that conveys signalling information to said radiotelephone.

12. A radiotelephone as set forth in claim 9 wherein said first and second messages are received over a radio channel that conveys frames of encoded speech information to said radiotelephone.

13. A radiotelephone as set forth in claim 12 wherein radiotelephone comprises a speech decoder for decoding the encoded speech, and wherein said first and second messages are transmitted within frames that are received by said speech decoder.

14. A method for operating a radiotelephone system, comprising the steps of:
detecting a reception of a start of a DTMF signal from a Public Switched Telephone Network;
constructing a first message for indicating a PSTN telephone keypad key that corresponds to the detected start of the DTMF signal;
transmitting the first message over a radio channel;
receiving the first message from the radio channel with a radiotelephone;
responsive to the received first message, generating a corresponding DTMF audio tone with the radiotelephone;
detecting a reception of a termination of the DTMF signal from the Public Switched Telephone Network;
constructing a second message for indicating the PSTN telephone keypad key that corresponds to the detected termination of the DTMF signal;
transmitting the second message over the radio channel;
receiving the second message from the radio channel with the radiotelephone; and
responsive to the received second message, terminating the generation of the corresponding DTMF audio tone with the radiotelephone.

15. A method as set forth in claim 14 wherein the steps of generating and terminating each include the steps of:
generating an acknowledgment message for acknowledging receipt of the message from the radio channel; and
transmitting the acknowledgment message over a radio channel from the radiotelephone.

16. A method as set forth in claim 15 wherein the first and second messages are received over a radio channel used for conveying signalling information to the radiotelephone, and wherein the acknowledgment message is transmitted over a radio channel used for conveying signalling information from the radiotelephone.

17. A method as set forth in claim 15 wherein the first and second messages are received over a radio channel used for conveying encoded speech information to the radiotelephone, and wherein the acknowledgment message is transmitted over a radio channel used for conveying encoded speech information from the radiotelephone.

18. A method as set forth in claim 14 wherein the steps of detecting and constructing are accomplished by a Mobile Switching Center that is connected to the Public Switched Telephone Network, and wherein the steps of transmitting are accomplished by a basestation subsystem that is coupled between the Mobile Switching Center and the radio channel.

19. A method as set forth in claim 14 wherein the steps of detecting, constructing and transmitting are accomplished by a basestation subsystem that is coupled to the Public Switched Telephone Network through a Mobile Switching Center.

20. A method as set forth in claim 19 wherein the steps of detecting, constructing and transmitting are accomplished by a basestation subsystem that is coupled to the Public Switched Telephone Network through a Mobile Switching Center, and wherein the step of constructing includes a step of routing the constructed first and second messages through the Mobile Switching Center and from the Mobile Switching Center to the basestation subsystem.

21. A method for operating a radiotelephone system, comprising the steps of:
generating a DTMF tone signal with a first radiotelephone;
transmitting the DTMF tone signal to a cellular network as a first DTMF signalling message;
extracting the DTMF tone signal from the first DTMF signalling message at the cellular network;
transmitting the DTMF tone signal from the cellular network to a second radiotelephone as a second DTMF signalling message;
extracting the DTMF tone signal from the second DTMF signalling message at the second radiotelephone; and
responsive to the extracted DTMF tone signal, generating a corresponding DTMF audio tone with the second radiotelephone.
